# EUROPEAN PATENT SPECIFICATION

(11) **EP 1 549 174 B1**
(45) Date of publication and mention of the grant of the patent: **25.05.2016**
(21) Application number: 03749772.4
(22) Date of filing: 17.09.2003
(51) Int. Cl.: A46B 5/02, A46B 9/04

(54) **TOOTHBRUSH WITH GRIPPING AREA**
ZAHNBÜRSTE MIT GRIFFBEREICH
BROSSE A DENT AVEC ZONE PREHENSION

(30) Priority: 20.09.2002 US 412290 P
(43) Date of publication of application: 06.07.2005
(60) Divisional application: 10194194.6
(73) Proprietor: Colgate-Palmolive Company, New York NY 10022-7499 (US)
(72) Inventor: HOHLBEIN, Douglas, J., Hopewell, New Jersey 08525 (US); ROONEY, Michael, Charles, Millburn, NJ 07041 (US)
(74) Representative: Thum, Bernhard
(86) International application number: PCT/US2003/029497
(87) International publication number: WO 2004/026162

(56) References cited:
- WO-A-00/64306
- DE-U1- 29 805 323
- GB-A- 2 050 156
- US-A- 3 185 001
- US-A- 5 339 482
- US-A- 5 673 454
- US-A- 5 735 012
- US-A- 5 781 958
- US-A- 5 860 183
- US-A- 5 926 901
- US-A- 6 049 936
- US-B1- 6 298 516

## Description

The present invention relates to a toothbrush with a gripping area or section.

### Background of the Invention

Various attempts have been made to provide the handle of a toothbrush with specialized gripping areas. Typical toothbrushes utilize a somewhat thin layer of elastomer on the surface of a rigid thermoplastic frame for a non-slip surface. U.S. Patent Nos. 2,263,885, 5,398,369, 5,781,958, 5,875,510, 6,108,869 (and its PCT counterpart WO97/29663) 6,179,503, 6,298,516 and 6,332,233, US published application 2002/0138931A1, as well as WO00/64306 show various practices where portions of the handle are recessed or otherwise accommodate pressure pads, non-slip structure, etc. in the gripping area. U.S. design patents D368,163, D416,685 and D446,021 also appear to illustrate toothbrushes having some form of special gripping structure on the surface of the handle. U.S. Patent No. 4,339,482 discloses a variation where the non-slip surface is provided on opposite sides of an insert which extends completely through a hole in the handle. The insert is stated to be fabricated from an elastomeric material and preferably from a thermoplastic injection moldable material. Alternatively, where the han-, dle is made pliable the insert may be fabricated from a material which is not readily compressed such as metals or hard plastics.

### Summary of Invention

An aim of this invention is to provide a toothbrush handle with a soft resilient gripping area.

A further aim of this invention is to provide such a gripping area which can be easily manufactured while providing the soft grip desired.

The present invention accordingly provides a toothbrush according to claim 1. Preferred features are defined in the dependent claims.

In accordance with this invention, the handle has a through hole extending completely through the gripping area. The through hole contains a yieldable material to permit a user's finger to press into the through hole when the user grips the handle to provide a soft resilient gripping area. The yieldable material is made from a single soft durometer material having a Shore A hardness of 30 or less, e.g. of 8 or less. The single soft durometer material may be a foam-type material and may be injected or may be force fit into the through hole of the handle. Alternatively, the yieldable material may be two shots of the same material in two different colors to provide visual interest.

### The Drawings :

Figure 1 is a front elevational view of a manual toothbrush having a soft resilient gripping area in accordance with this invention;
Figure 2 is a longitudinal cross-sectional view in elevation of one form of yieldable material forming the gripping area of the toothbrush of Figure 1;
Figures 3-6 are views similar to Figure 2 of alternate forms of gripping area structure;
Figure 7 is a front elevational view of yet another gripping area structure;
Figures 8-10 are views similar to Figures '2-6 of still yet further gripping area structures;
Figure 11 is a front elevational view of a further toothbrush;
Figures 12-13 are side and rear elevational views of the toothbrush shown in Figure 11;
Figure 14 is a cross-sectional'view taken through Figure 11 along the line 14-14;
Figure 15 is a cross-sectional view taken through Figure 13 along the line 15-15;
Figure 16 is a fragmental elevational view partly broken away of a portion of the handle shown in Figures 11-13; and
Figure 17 is a front elevational view of a power driven toothbrush

### Detailed Description

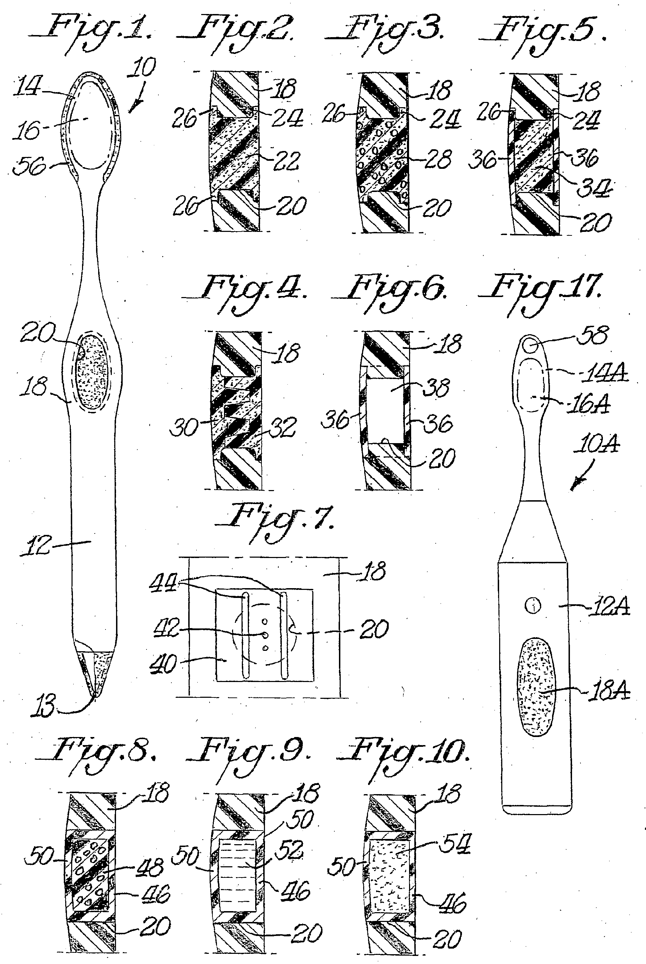

Figure 1 illustrates a toothbrush 10 in accordance with this invention. As shown therein the toothbrush 10 could be of any generally known construction which includes a handle 12 and a head 14. Head 14 would have an outer surface from which a pattern of cleaning elements 16 (shown schematically in phantom) would extend. Handle 12 would have a gripping area or section 18 which in normal use would be held with the fingers wrapped around the handle wherein the thumb is on one side of the handle and the index finger and other fingers are on the opposite side of the handle. One of these gripping surfaces would be on the same side of the toothbrush as is the outer surface of head 14 from which the cleaning elements 16 extend. The other gripping surface would be on the opposite side of the handle.

The cleaning elements may take any known form such as bristles, massage elements, or prophy cups made of any suit- able materials and disposed at any desired orientation with respect to the outer surface of head 14.

Handle 12 would be generally made from conventional hard plastic materials such as polypropylene or other rigid or semi-rigid plastics. In accordance with this invention the gripping section 18 of handle 14 would be wider than conventional stems or handles. As a result, there is sufficient width or a sufficient transverse dimension across han- dle 12 at gripping section 18 to permit the inclusion of a large through hole 20 in section 18. The entire handle 12 may be of wider than conventional construction or only the gripping area 18 may be of the wider construction. As shown in Figure 1 the through hole 20 occupies more than one-half of the transverse dimension across gripping section 18 of handle 12.

In the broad practice of this invention the through hole 20 is filled with a yieldable material so as to provide a soft resilient gripping area. This thereby achieves a soft pliable feeling through the nature of the construction of the gripping section 18 when the toothbrush is being used. The large void or through hole 20 contains and preferably is completely filled with a yieldable material which provides a soft core than can take various forms, some of which are illustrated in Figures 2-16. The benefit of the large through hole 20 is twofold. The first is that the larger the mass, the more compression one will experience under normal gripping force. The second benefit is that the through hole 20 allows one to "feel" the compression from one side of the handle to the other as the compressive force drives the yieldable material toward the opposite surface. During brushing this allows the handle to "float" in one's hand as the mass shifts in relation to the forces applied against the teeth.

Where the invention is practiced by at least partially and preferably completely filling the through hole 20 with a soft yieldable material, the material is preferably a low durometer elastomer having shock absorbing qualities. A preferred softness would be a Shore A hardness of 30 or less. More preferred softnesses would be a Shore A of 13 or less, 10-13, 8 or less, 5 or less and 2 or less. Any suitable soft elastomer may be used which provides these characteristics.

In the embodiment shown in Figure 2 the through hole 20 is filled with a single soft durometer elastomeric material 22. The rigid portion of gripping area 18 may have recesses forming shoulders 24 to prevent the soft elastomer material 22 from being dislodged. Thus, when the soft elastomer material 22 is in place, the material has flanges 26 which are disposed against shoulders 24.

Figure 3 shows a variation wherein the yieldable material is of any suitable foam core 28. As with the embodiment in Figure 2 the rigid stem 18 would have recesses forming shoulders 24 which would be in contact with flanges 26.

Figure 4 shows a variation of the invention wherein the core which fills through hole 20 would be made of two shots of the same material which could be in two clear tints or colors to provide visual interest. As illustrated the two shots of material 30,32 are intermeshed.

Figure 5 illustrates a variation not according to the invention wherein the soft yieldable material 34 fills the void or through hole 20 and is maintained in place by the provision of a thin skin 36 on each of the outer gripping surfaces in gripping area 18. The skins 36 could be located in the recesses of gripping area 18 at shoulders 24. If desired, the skins 36 could be made of a more durable material than the core material 34 which fills the through hole 20. The thin skins could be made of a resilient material to permit the skins to allow the user to press into the through hole to allow the user to "feel" the compression from one side of the handle to the other as.the compressive force drives the material toward the opposite surface. The material would then return to its normal position when the force is no longer being applied. The skins 36 could be secured to the rigid stem 18 in any suitable manner such as by ultrasonic welding.

Figure 6 shows a variation not according to the invention wherein the yieldable material in the through hole 20 is an air pocket 38. By having the outer skins 36,36 completely sealed the through hole 20 an air lock is created. The air lock shown in Figure 6 creates an air mattress or bubble within the hollow core.

In a variation of the air pocket shown in Figure 6, Figure 7 shows the skins 40 to have perforations or holes 42 which permits air to flow into and out of the air pocket. Figure 7 also illustrates the outer skins 40 being reinforced by adequate structure such as sufficient thickness or local ribs or truss sections 44 to provide grip resilience.

Figure 8 shows a practice not according to the invention wherein the through hole 20 contains a prefilled capsule 46 which is filled or contains a yieldable material. In the variation shown in Figure 8 the yieldable material is a suitable gel 48. The exposed portions of the capsule 48 would function as outer skins 50,50.

Figure 9 shows a variation not according to the invention shown in Figure 8 where the capsule 46 is filled with a suitable liquid 52.

Figure 10 shows still another variation not according to the invention wherein the yieldable material is a particulate material 54 such as granules of sand, plastic, etc.

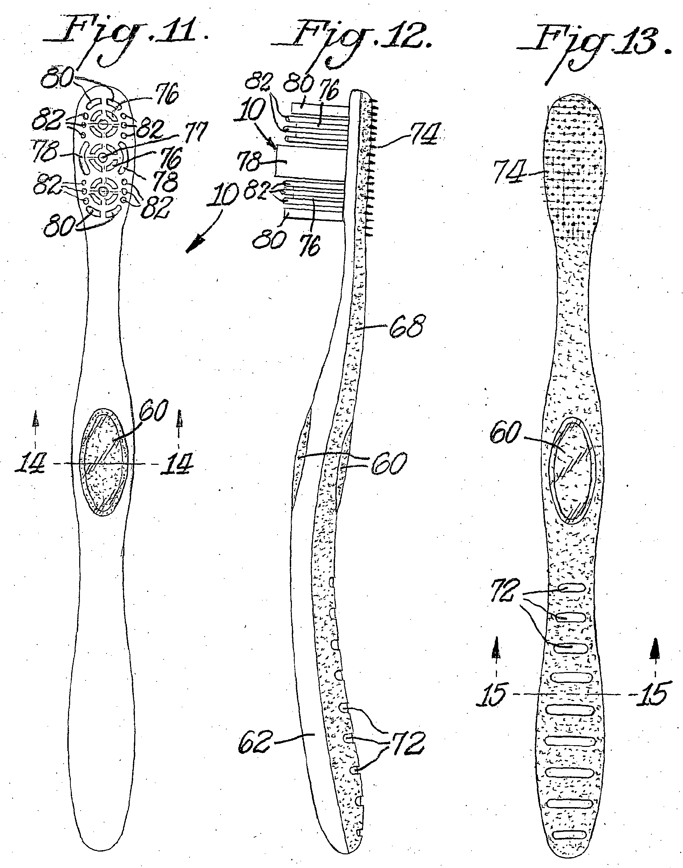

Figure 1 also illustrates a further feature of the invention wherein the head 14 is provided with peripheral bumpers 56 made of a yieldable material similar, for example, to the materials 22, 28 and 34 used in the gripping area. The yieldable material 56 is advantageous in that it would provide soft contact areas on the portions of head 14 which might contact the gums. The provision of bumper material 56, such as on the head 14 or 14A of Figure 17, is desirable since it softens the impact on the gums when there is any contact of the head against the gums. The opposite end 13 of toothbrush 10, at the remote tip of handle 12 may be of yieldable material which is generally pointed to function as a toothpick or gum massager. As later described with respect to Figures 12-13 the head 14 could include tongue cleaning texture.

In the various practices of this invention the through hole 20 could be filled partially or completely with the yieldable material in any suitable manner such as by being injected into the through hole or force fit into the through hole.

The first outer gripping surface and second outer gripping surface on opposite sides of the gripping section with the through hole located there between preferably have a contour which blends in or is a smooth continuation of the general contour of the gripping section 18 in the handle itself such as illustrated in the various figures. Alternatively, the outer gripping surfaces could bulge slightly or even be slightly recessed from the general contour of the surrounding gripping section.

One aspect of the present invention is the recognition of design trends in toothbrushes for incorporating elastomeric materials in handles and in all parts of the brush that are becoming softer and softer. As these materials are formulated to become softer they typically become less adherent to the materials used in the handles (such as polypropylene and other rigid and semi-rigid plastics). This becomes the limiting factor in various designs. In the variation illustrated in Figures 11-16, which is not according to the invention, a thin layer of harder elastomeric material is molded between the base material made of rigid or semi-rigid plastic and the softer elastomer in the toothbrush handle wherein the softer elastomer could be utilized in the gripping area or other portions of the toothbrush. This would allow the use of two materials, namely, a hard material such as polypropylene and a very soft elastomer to be used that do not normally adhere to one another with sufficient strength and such materials could be used in the manufacturing of a handle due to the ability of both the base harder material and the softer elastomer to adhere to the intermediate thin layer of harder elastomer.

This thus overcomes the problem of being able to use softer materials which typically do not adhere well to the rigid and semi-rigid materials used for structural support within the handles. This is accomplished by using a layer of elastomer molded over the rigid or semi-rigid plastic that has properties that allow it to adhere to these types of plastics. As the elastomer material for this layer also has properties that enable it to adhere to the softer elastomer, it enables the utilization of the two otherwise incompatible materials to be used in the same handle.

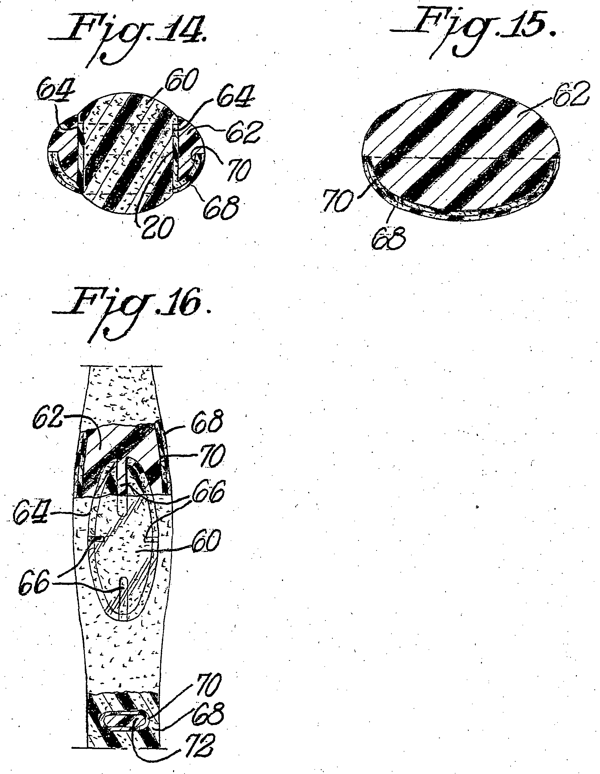

Figures 11-16 illustrate a toothbrush which relates to the above aspect. As shown therein the handle includes a through hole 20 which is filled with a soft elastomer material 60. See Figure 14. The soft elastomer material 60 would preferably have a very low hardness such as a Shore A of 8 or below. In order to secure the elastomer or yieldable material 60 to the hard handle material 62 which surrounds the through hole 20, a thin layer of elastomeric material 64 lines the inner wall of the through hole. Layer 64 is made of a higher durometer elastomer material which has the property of adhering to the hard material 62 such as a rigid polypropylene material. The hard durometer material 64, however, is also capable of adhering to its similar soft durometer material 60. Thus, the gripping area would be formed by first injecting the thin layer of higher durometer elastomer 64 into the through hole 20 to adhere to the hard material .62. Then, the very low durometer material 60 would be over molded onto the higher durometer elastomer layer 64.

As shown in Figure 16 if desired the high durometer material 64 could have inwardly directed projections 66 to increase the surface area against which the low durometer material 60 could be secured.

Any suitable elastomers may be used in accordance with this invention for materials 60 and 64. For example, an elastomer marketed by GLC Corporation under the name VERSAFLEX^{®} CL2003X which is a thermoplastic rubber compound is an extremely soft material which will not stick to polypropylene but would stick to higher durometer elastomers. Such elastomer would be suitable for yieldable elastomer 60. A higher durometer elastomer could be another product marketed by GLS Corporation under the trademark DYNAFLEX^{®} G2711-1000-00, which is a thermoplastic elastomer compound made with KRATON^{®} polymer. Such material will adhere to hard materials such as polypropylene and to soft elastomers. Such material would be suitable for elastomer 64. It is to be understood that reference to these specific materials is for exemplary purposes and is not intended to be limiting since any suitable elastomers could be uses.

As shown in Figures 12 and 14 the gripping surface of the low durometer elastomer yieldable material 60 extends outwardly from the general smooth profile of the handle. The toothbrush is otherwise in the shape of a gentle S.

In this general practice of the toothbrush of Figures 11-16 the gripping surface is a very low hardness elastomeric material 60 having a Shore A hardness, for example, of 8 or less. The very low durometer elastomer material 60 is secured to the rigid or semi-rigid material 62 generally used in the handle, such as polypropylene, by means of an intermediate layer 64 which is sufficiently hard to adhere to the polypropylene material 62 and which is compatible with the low durometer elastomer 60 so that it will also adhere to the low durometer elastomer 60. The intermediate layer 64 could be of any suitable hardness which is harder than the hardness of the low durometer elastomer. Such higher durometer elastomer material could have a Shore A hardness of greater than 8 and preferably greater than 30.

The grip surface 18 and the material filling through hole 20 may be transparent, may be tinted or may be of various colors to correspond to or contrast with the adjacent portion of the handle 12.

The concept of adhering a very low durometer elastomer material to a hard material such as polypropylene could also be utilized for adhering such very low durometer material to other parts of the toothbrush. Figures 12-13, for example, illustrate the back of the toothbrush to include a layer 68 of soft material. If desired the soft layer 68 could be adhered to the harder handle material 62 by first applying an intermediate layer 70 against the outer surface of the hard material 62. See Figure 15. The very low durometer material 68 could then be overmolded on the inner layer 70. This could be done in any portions of the toothbrush including the handle and the head. To facilitate the securement of the outer soft layer 68 to the hard handle material 62 the hard handle material could include a series of projections 72, which are illustrated in Figures 13 and 16, as being generally parallel to each other and extending.across the width of the back side of the toothbrush at generally uniform intervals. The length of each projection 72 could gradually increase in accordance with the location of the handle of each projection 72, thus the longest projections would be at the widest portion of the handle.

Figures 12-13 illustrate a further feature of this invention wherein the back of the head has an elastomeric tongue cleaning or scraping texture 74 creating a generally rough surface. The tongue cleaning surface 74 alone or in combination with the pointed tip 13 (Figure 1) which can be a toothpick or a gum massager, makes the toothbrush quite versatile.

Any suitable arrangement of cleaning elements could be used in the head on the various embodiments of this invention. Figure 11 shows a particularly desirable arrangement which includes a plurality of spaced aligned prophy cups 76 centrally located along the longitudinal axis of the brush head. Each prophy cup is in the form of four outwardly extending elastomeric elements which are coarcuate so as to form an interrupted cup-like cylinder. Within each prophy cup 76 there is a tuft of bristles 77. The outer ends of the bristles 77 taper inwardly from the circumference toward the center of the tufts of bristles so that each tuft of bristles 77 is also cup shaped.

As shown in Figure 11 an elongated elastomeric cleaning element 78 is provided on each side of the central prophy cup. A pair of elongated elastomeric elements 80 is provided outwardly of each end prophy cup. Tufts of bristles 82 are provided between the various elastomeric cleaning elements 70 and 80 as also illustrated in Figure 11.

The various cleaning elements illustrated in Figures 11-12 preferably are of different lengths. For example, the central peripheral elastomeric elements 78 comprise the longest cleaning elements and are longer than the end elastomeric cleaning elements 80. The tufts of bristles 82 are of a length between the lengths of the elastomeric cleaning elements 78 and 80. The prophy cups 76 extend a shorter distance from the head than the elastomeric cleaning elements 80, while the tufts of bristles 77 within the prophy cups extend a shorter distance than the prophy cups. The tufts of bristles 82 along side the endmost prophy cups 76 may extend a distance generally equal to the diameter of the prophy cups 76. The intermediate elastomeric cleaning elements 78 are of arcuate shape and extend a distance generally equal to or slightly larger than the diameter of the central prophy cup 76.

The tufts of bristles 82 for the prophy cup 76 which is nearest to the handle extend over a distance which is generally equal to the diameter of its prophy cup 76. These tufts of bristles need not be located precisely in line with their respective prophy cups. The end elastomeric cleaning elements 80 are preferably of a shape which tapers from its smallest distance at the perimeter of the head 14 toward the longitudinal center line of the head. The intermediate elastomeric cleaning element 78 however, are preferably of uniform thickness.

Figure 17 shows a toothbrush not according to the invention wherein the toothbrush 10A is a power driven toothbrush having, for example, a movable section 58 on head 14A. As illustrated movable section 58 is located near the portion of the head 14A having the cleaning elements 16A. Movable section 56 would also be provided with outwardly extending cleaning elements (not shown). The handle 12A of power toothbrush 10A would generally include power structure such a batteries, a motor and a shaft within the hollow handle. The invention would be practiced by providing the gripping portion 18A of the hollow handle 12A with a solid section having a through hole for the yieldable material. Care would be taken so that the through hole could be created through handle 12A without interfering with the location of the power structure.

Any suitable type of power motion could be imparted to moving section 58. Examples of such power driven movement include 36.0° continuous rotation, oscillating rotation, linear longitudinal movement with regard to the longitudinal axis of the toothbrush, transverse longitudinal movement with regard to the longitudinal axis of the toothbrush and in and out movement generally perpendicular to the longitudinal axis of the toothbrush.

The invention thus provides a unique grip sensation on a toothbrush handle. Where a generally conventional toothbrush structure is used, such as in a manual toothbrush, the width of the frame of the handle is expanded to accommodate a large through hole in the grip area. The large through hole can then be filled completely or partially with a large mass of yieldable material such as soft durometer elastomer which can take a number of configurations.

It is to be understood that various features of specific embodiments may be used in other embodiments within the teachings of this invention.

## Claims

1. A toothbrush (10) comprising an elongated handle (12), a head (14) secured to one end of said handle (12), cleaning elements (16) mounted to said head (14) and extending outwardly from an outer surface of said head (14), said handle (12) having a gripping section (18) intermediate its ends, said handle (12) having a first outer gripping surface on the same side of said handle (12) as said outer surface of said head (14), said handle (12) having a second outer gripping surface on the side of said handle (12) remote from said first outer gripping surface, said first outer gripping surface and said second outer gripping surface being transversely aligned with each other and being in said gripping section (18), wherein said toothbrush (10) further comprises a through hole (20) in said gripping section (18) of said handle (12) extending from said first outer gripping surface to said second outer gripping surface, said through hole (20) containing a yieldable material (22) to permit a user's finger to press into said through hole (20) when the user grips said handle (12) at said gripping section (18), said yieldable material (22) being a low durometer elastomer having a Shore A hardness of 30 or less, wherein said yieldable material (22) is a single soft durometer material (22), and said yieldable material (22) having flanges (26) which are disposed against shoulders (24) of the handle (12) that prevents the yieldable material (22) from being dislodged from the through hole (20), **characterised in that** said through hole (20) occupies more than one-half of the transverse dimension of said gripping section (18) so that a user can feel compression from the first outer gripping surface to the second outer gripping surface as compressive force drives the yieldable material (22).

2. The toothbrush of claim 1 wherein said yieldable material (22) has a Shore A hardness of 13 or less.

3. The toothbrush of claim 2 wherein said Shore A hardness is 10-13.

4. The toothbrush of claim 1 wherein said Shore A hardness is 5 or less.

5. The toothbrush of claim 1 wherein said first outer gripping surface and said second outer gripping surface bulge from the general contour of the surrounding gripping section (18).

6. The toothbrush of claim 1 including a yieldable material (56) peripherally around said head (14) to soften impact on the gums.

7. The toothbrush of claim 1 wherein the remote tip of said handle (12) is made of a yieldable material which is generally pointed to function as a toothpick or gum massager.

8. The toothbrush of claim 1 wherein a surface of said head remote from said outer surface having said cleaning elements (16) is roughened to comprise a tongue cleaning surface (74).

9. The toothbrush of claim 1 wherein said cleaning elements (16) comprise a set of centrally located aligned prophy cups (76), a plurality of elongated elastomer cleaning elements (78, 80) being mounted along the periphery of said head (14), and a plurality of tufts of bristles (82) being located between pairs of said elongated cleaning elements (78, 80) along the periphery of said head (14).

## Patentansprüche

1. Zahnbürste (10) umfassend:
einen länglichen Griff (12),
einen Kopf (14), der am Ende des Griffs (12) befestigt ist,
Reinigungselemente (16), die an dem Kopf (14) angebracht sind und sich von einer Außenfläche des Kopfs (14) nach außen erstrecken, wobei
der Griff (12) einen Griffabschnitt (18) zwischen seinen Enden aufweist, wobei
der Griff (12) eine erste äußere Grifffläche auf derselben Seite des Griffs (12)
wie die Außenfläche des Kopfs (14) aufweist, wobei
der Griff (12) eine zweite äußere Grifffläche auf der Seite des Griffs (12) aufweist, die von der ersten Grifffläche abgewandt ist, wobei
die erste äußere Grifffläche und die zweite äußere Grifffläche, quer zueinander angeordnet sind und sich in dem Griffbereich (18) befinden,
wobei die Zahnbürste (10) weiter umfasst
ein Durchgangsloch (20) in dem Griffabschnitt (18) des Griffs (12), das sich von der ersten äußeren Grifffläche zu der zweiten äußeren Grifffläche erstreckt, wobei das Durchgangsloch (20) nachgiebiges Material (22) umfasst, um es dem Finger des Nutzers zu ermöglichen, in das Durchgangsloch (20) zu drücken, wenn der Nutzer den Griff (12) am Griffbereich (18) ergreift, wobei
das nachgiebige Material (22) ein weiches Durometer-Elastomer mit einer Shore-A-Härte von 30 oder weniger ist, wobei das nachgiebige Material (22) ein einfaches Soft-Durometer-Material (22) ist und wobei
das nachgiebige Material (22) Kanten (26) aufweist, die an den Seiten (24) des Griffs (12) angeordnet sind, die verhindern, dass das nachgiebige Material (22) aus dem Durchgangsloch (20) herausgelöst wird,
**dadurch gekennzeichnet, dass** das Durchgangsloch (20) mehr als eine Hälfte der Querrichtung von dem Griffbereich (18) einnimmt, so dass ein Nutzer die Kompression von der ersten äußeren Grifffläche zu der zweiten äußeren Grifffläche fühlen kann, wenn eine Druckkraft das nachgiebige Material bewegt.

2. Zahnbürste nach Anspruch 1, wobei das nachgiebige Material (22) eine Shore-A-Härte von 13 oder weniger aufweist.

3. Zahnbürste nach Anspruch 2, wobei die Shore-A-Härte 10-13 ist.

4. Zahnbürste nach Anspruch 1, wobei die Shore-A-Härte 5 oder weniger ist.

5. Zahnbürste nach Anspruch 1, wobei die erste äußere Grifffläche und die zweite äußere Grifffläche von der allgemeinen Kontur der umgebenden Grifffläche (18) hervorstehen.

6. Zahnbürste nach Anspruch 1, umfassend ein nachgiebiges Material (56), das peripher um den Kopf (14) angeordnet ist, um einen Stoß auf das Zahnfleisch zu mildern.

7. Zahnbürste nach Anspruch 1, wobei die äußerste Spitze des Griffs (12) aus nachgiebigem Material hergestellt ist, das allgemein dazu vorgesehen ist, als ein Zahnstocher oder ein Zahnfleischmasseur zu funktionieren.

8. Zahnbürste nach Anspruch 1, wobei eine von der Außenfläche abgewandte Oberfläche des Kopfs mit den Reinigungselementen (16) aufgeraut ist, um eine Zungenreinigungsoberfläche (74) zu umfassen.

9. Zahnbürste nach Anspruch 1, wobei die Reinigungselemente (16) einen Satz von zentral angeordneten Prophy-Kelchen (76), eine Vielzahl von länglichen Elastomer-Reinigungselementen (78, 80), die entlang der Peripherie des Kopfes (14) angebracht sind, und eine Vielzahl von Bürstenbüscheln (82), die zwischen Paaren der länglichen Reinigungselemente (78, 80) entlang der Peripherie des Kopfes (14) angeordnet sind, umfassen.

## Revendications

1. Brosse à dents (10) comprenant une poignée (12) allongée, une tête (14) fixée sur une extrémité de ladite poignée (12), des éléments de nettoyage (16) montés sur ladite tête (14) et s'étendant vers l'extérieur depuis une surface extérieure de ladite tête (14), ladite poignée (12) ayant une section de préhension (18) entre ses extrémités, ladite poignée (12) ayant une première surface extérieure de préhension sur le même côté de ladite poignée (12) que ladite surface extérieure de ladite tête (14), ladite poignée (12) ayant une deuxième surface extérieure de préhension sur le côté de ladite poignée (12) distante de ladite première surface extérieure de préhension, ladite première surface extérieure de préhension et ladite deuxième surface extérieure de préhension étant transversalement alignées l'une avec l'autre et étant dans ladite section de préhension (18), dans laquelle ladite brosse à dents (10) comprend en outre un trou traversant (20) dans ladite section de préhension (18) de ladite poignée (12) s'étendant de ladite première surface extérieure de préhension jusqu'à ladite deuxième surface extérieure de préhension, ledit trou traversant (20) contenant un matériau déformable (22) pour permettre qu'un doigt d'un utilisateur appuie dans ledit trou traversant (20) lorsque l'utilisateur prend ladite poignée (12) au niveau de ladite section de préhension (18), ledit matériau déformable (22) étant un élastomère à bas duromètre ayant une dureté Shore A de 30 ou moins, dans laquelle ledit matériau déformable (22) est un matériau unique à duromètre souple (22), et ledit matériau déformable (22) ayant des pattes (26) qui sont disposées contre des épaulements (24) de la poignée (12) qui empêchent que le matériau déformable (22) ne soit délogé du trou traversant (20), **caractérisée en ce que** ledit trou traversant (20) occupe plus d'une moitié de la dimension transversale de ladite section de préhension (18) de façon à ce qu'un utilisateur puisse sentir une compression de la première surface extérieure de préhension sur la deuxième surface extérieure de préhension lorsqu'une force compressive agit sur le matériau déformable (22).

2. Brosse à dents selon la revendication 1, dans laquelle ledit matériau déformable (22) a une dureté Shore A de 13 ou moins.

3. Brosse à dents selon la revendication 2, dans laquelle ladite dureté Shore A est 10 à 13.

4. Brosse à dents selon la revendication 1, dans laquelle ladite dureté Shore A est 5 ou moins.

5. Brosse à dents selon la revendication 1, dans laquelle ladite première surface extérieure de préhension et ladite deuxième surface extérieure de préhension sont un renflement depuis le contour général de la section de préhension (18) environnante.

6. Brosse à dents selon la revendication 1, incluant un matériau déformable (56) périphériquement autour de ladite tête (14) pour adoucir un impact sur les gencives.

7. Brosse à dents selon la revendication 1, dans laquelle la pointe distante de ladite poignée (12) est constituée d'un matériau déformable qui est de façon générale en pointe pour fonctionner comme un cure-dent ou un dispositif de massage des gencives.

8. Brosse à dents selon la revendication 1, dans laquelle une surface de ladite tête distante de ladite surface extérieure ayant lesdits éléments de nettoyage (16) est rugosifiée pour comprendre une surface (74) de nettoyage de la langue.

9. Brosse à dents selon la revendication 1, dans laquelle lesdits éléments de nettoyage (16) comprennent un ensemble de coupelles de prophylaxie (76) alignées situées centralement, une pluralité d'éléments de nettoyage (78, 80) allongés en élastomère étant montés le long de la périphérie de ladite tête (14), et une pluralité de touffes de soies (82) étant situées entre des paires desdits éléments de nettoyage (78, 80) allongés le long de la périphérie de ladite tête (14).
